# FASCICULE DE BREVET EUROPEEN

(11) **EP 2 914 861 B1**
(45) Date de publication et mention de la délivrance du brevet: **01.08.2018**
(21) Numéro de dépôt: 13789878.9
(22) Date de dépôt: 23.10.2013
(51) Int. Cl.: F16B 5/02, F01D 17/06, G01P 1/02

(54) **SYSTÈME DE FIXATION D'UN ÉQUIPEMENT ÉLECTRIQUE SUR UN SUPPORT MÉTALLIQUE**
SYSTEM ZUR BEFESTIGUNG EINES ELEKTRISCHEN AUSRÜSTUNGSTEILS AN EINEM METALLISCHEN TRÄGER
SYSTEM FOR ATTACHING ELECTRICAL EQUIPMENT TO A METALLIC SUPPORT

(30) Priorité: 30.10.2012 FR 1260372
(43) Date de publication de la demande: 09.09.2015
(73) Titulaire: Safran Aircraft Engines, 75015 Paris (FR)
(72) Inventeur: VAN CEULEN, Sylvain, F-77550 Moissy-Cramayel Cedex (FR); COMIN, François, F-77550 Moissy-Cramayel Cedex (FR); BARDIN, Pierre-Guillaume, F-77550 Moissy-Cramayel Cedex (FR)
(74) Mandataire: Regimbeau
(86) Numéro de dépôt international: PCT/FR2013/052542
(87) Numéro de publication internationale: WO 2014/068224

(56) Documents cités:
- EP-A1- 1 273 766
- GB-A- 2 227 764

## Description

L'invention concerne de manière générale un système de fixation d'un équipement électrique sur un support métallique.

L'invention peut par notamment concerner un système de fixation d'un équipement électrique, par exemple un capteur inductif adapté pour mesurer le régime de rotation d'un moteur, dit capteur N1, sur un support métallique, par exemple un carter métallique du moteur.

Les capteurs inductifs de type N1 sont des capteurs adaptés pour détecter la vitesse de rotation d'une roue phonique d'un moteur par détection du passage des dents devant le capteur, générant ainsi une variation du champ magnétique qui crée dans le capteur un courant alternatif. Le capteur N1 permet ainsi de mesurer et surveiller le régime de rotation d'un moteur, et de transmettre cette information à un calculateur d'un système de régulation par l'intermédiaire de cosses métalliques connectées audit capteur N1.

Pour cela, le capteur N1 comprend de manière usuelle au moins un insert d'interface métallique, généralement un pour chaque pôle, connectés chacun à une cosse par l'intermédiaire de pièces métalliques adaptées pour permettre la transmission du signal au calculateur de régulation.

On pourra notamment se référer au capteur 1 de type N1 commercialisé par la société MEGGITT sous la référence « N1 Speed Probe » pour plus d'informations concernant cet insert.

Le capteur N1 est généralement monté sur une pièce de structure du carter en regard de la roue phonique. Pour cela, une vis métallique est insérée dans chacun des inserts de manière à fixer le capteur sur le carter tout en assurant la transmission électrique aux cosses.

Toutefois, le carter étant un support métallique, le capteur N1 doit être monté sur le support tout en étant électriquement isolé de celui-ci afin de pouvoir transmettre le signal électrique au calculateur.

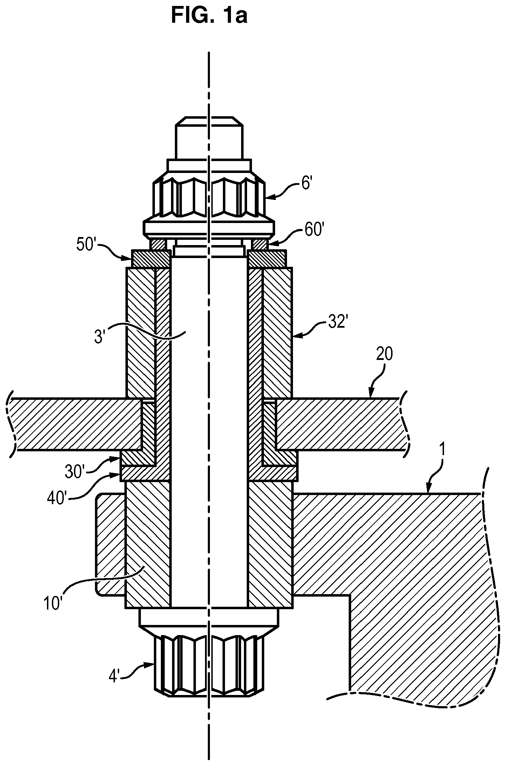

Un exemple d'un tel montage est illustré sur la figure 1a. Comme on peut le voir, le système de fixation usuel comprend une vis 3', des douilles à collerette métallique 40' et isolante 30', une entretoise électriquement isolante 32', une rondelle métallique 50', une cosse 60' ainsi qu'un écrou 6'.

La vis 3' est insérée dans l'insert 10' de sorte que la tête de vis 4' arrive en butée contre l'insert 10'. Puis, la douille à collerette 40' métallique et la douille à collerette 30' électriquement isolante sont emmanchée successivement sur la vis de sorte que les collerettes des douilles se trouvent en butée contre l'insert.

Le support métallique 20' est alors positionné contre la douille isolante 30', puis l'entretoise 32', qui est électriquement isolante et mécaniquement plus souple que les autres pièces, de forme globalement cylindrique, et la rondelle métallique 50' sont emmanchées successivement par-dessus le support métallique 20'. Enfin, la cosse 60' est disposée contre la rondelle 50' et un écrou 6' est vissé à l'extrémité de la vis 3' afin d'assurer un maintien mécanique de l'ensemble de pièces.

La partie cylindrique de la douille métallique 40' est suffisamment longue pour recevoir à la fois la douille isolante 30', le support métallique 20', l'entretoise isolante 32' et la rondelle métallique 50' le long de sa partie cylindrique en contact avec la vis 3', de manière à permettre la transmission du signal électrique de l'insert 10' à la cosse 60'. De plus, lors du serrage de l'écrou 6', la douille à collerette 32' isolante est compressée par la rondelle métallique 50' afin qu'un contact électrique s'établisse entre l'insert 10', la douille à collerette 40' métallique, la rondelle métallique 50' et la cosse 60'.

Dans ce montage, le transfert du signal électrique de l'insert 10' vers la cosse 60' se fait donc par l'intermédiaire de la douille 40' métallique et de la rondelle métallique 50'. Par ailleurs, son isolation électrique repose sur l'utilisation de la douille isolante 30' et de l'entretoise souple isolante 32'.

Néanmoins, ce montage n'est pas adapté pour être utilisé dans un moteur, qui, en fonctionnement, peut subir des températures s'échelonnant de - 55°C à + 160°C et de puissantes vibrations dues au fonctionnement du moteur : ces sollicitations déforment en effet l'entretoise 32' et la douille isolante 30', provoquant ainsi l'apparition d'un jeu important dans le montage, de sorte que le capteur N1 n'est plus maintenu en position par rapport au support métallique 20'. Par ailleurs, les polymères habituellement utilisés pour la douille 30' et l'entretoise d'isolation 32', par exemple le polytétrafluoroéthylène (PTFE) ou le polyétheréthercétone (PEEK), présentent une température de transition vitreuse incompatible avec la température de fonctionnement du capteur N1.

Le document GB 2 227 764 quant à lui propose un système de fixation d'une attache métallique de bâtiment sur un support métallique en vue de limiter les problèmes de corrosion bimétallique. L'attache est fixée au support à l'aide d'un axe, inséré à travers un logement formé dans l'attache et dans le support. Une entretoise, formée dans un matériau isolant, est en outre emmanchée sur l'axe, et interposée entre l'attache et le support. Le système de fixation comprend en outre un joint, positionné contre l'entretoise.

Ce système de fixation n'est pas davantage adapté pour être utilisé dans un moteur, dans la mesure où les sollicitations importantes (environnement vibratoire et thermique sévère) subies par l'entretoise et le joint auraient pour effet l'apparition d'un jeu important entre le support et l'attache. Il apparaît en effet que, malgré l'utilisation d'excellents matériaux isolants, l'écrou se desserre et les pièces isolantes se déforment dans de telles conditions. On remarquera toutefois que ce document ne vise pas à proposer un système de fixation capable de subir un tel environnement sévère, dans la mesure où les conditions normales d'utilisation de l'attache sont celles du bâtiment, à savoir une température ambiante et des vibrations négligeables.

Un objet de l'invention est donc de proposer un système de fixation d'un équipement électrique capable à la fois d'assurer le maintien mécanique de l'équipement électrique sur un support métallique, de transmettre un signal électrique issu de l'équipement électrique et d'isoler électriquement l'équipement électrique du support métallique, et ce malgré un environnement sévère en vibrations et en températures de l'équipement en fonctionnement.

Pour cela, l'invention propose un système de fixation selon la revendication 1.

Dans le cas notamment d'un système de régulation d'un moteur, un tel système de fixation permet de séparer les fonctions d'isolation électrique, de maintien mécanique et de serrage d'écrou, en maintenant les moyens d'isolation en contact contre le support métallique quelles que soient la température et les vibrations appliquées au montage. On s'affranchit ainsi des éventuelles déformations des moyens d'isolation dues à des variations thermiques ou aux vibrations subies par le capteur et/ou le support métallique. L'isolation électrique vis-à-vis du support métallique et le maintien mécanique du capteur sur le support métallique sont donc garantis dans les conditions normales d'utilisation du capteur, c'est-à-dire dans les gammes de vibrations et de températures (jusqu'à 160°C) pouvant être rencontrées dans un moteur, tout en permettant la transmission d'un signal électrique.

Certains aspects préférés mais non limitatifs du système de fixation sont les suivants :
- le moyen élastique est l'un au moins des éléments du groupe suivant : un ressort en compression, une entretoise,
- l'organe d'appui est une collerette d'une douille à collerette disposée entre l'axe et le logement traversant du support métallique
- l'organe d'appui est une collerette formée intégralement en une seule pièce avec l'axe,
- le système de fixation comprend en outre une cale, s'étendant entre l'organe d'appui et l'insert métallique le long de l'axe, et adaptée pour maintenir l'organe d'appui et l'insert métallique à une distance minimale correspondant à la longueur de ladite cale,
- les moyens d'isolation comprennent :
   * une première rondelle isolante emmanchée sur l'axe entre le support métallique et l'insert métallique, et
   * une deuxième rondelle isolante emmanchée sur l'axe entre le support métallique et l'organe d'appui, et adaptée pour recevoir l'effort exercé par le moyen élastique,
- la cale s'étend entre l'axe et les moyens d'isolation, de manière à empêcher la transmission auxdits moyens d'isolation d'efforts appliqués par l'insert métallique sur l'organe d'appui ou inversement,
- les moyens d'isolation comprennent en outre un tube isolant emmanché sur l'axe et séparant le support métallique de l'organe d'appui,
- la première et la deuxième rondelle isolante et/ou le tube isolant sont réalisés en polyétherimide,
- le système de fixation comprend en outre une rondelle métallique, emmanchée sur l'axe et disposée entre la première rondelle isolante et l'insert, et
- le système de fixation comprend en outre une cosse emmanchée sur l'axe, en contact direct avec l'insert d'interface du côté opposé aux moyens d'isolation. Cela qui permet de réduire le nombre de surfaces en contact pour la transmission du signal électrique de l'insert métallique au calculateur de régulation.

D'autres caractéristiques, buts et avantages apparaîtront mieux à la lecture de la description détaillée qui va suivre, faite en référence aux figures annexées données à titre non limitatif et sur lesquelles :
La figure 1a illustre un exemple de fixation d'un équipement électrique du type capteur N1 sur un support métallique conforme à l'art antérieur,
La figure 1b est une vue tridimensionnelle en coupe partielle d'un exemple d'équipement électrique pouvant être fixé à l'aide d'un système de fixation conforme à l'invention, et
Les figures 2a à 2c illustrent un exemple de fixation d'un capteur inductif sur un support métallique d'un système de régulation conforme à l'invention.

Dans ce qui suit, l'invention va être illustrée plus particulièrement dans le cadre d'un système de régulation S d'un moteur, par exemple un moteur M d'avion, comprenant un capteur inductif 1 du type du capteur N1 fixé sur un carter 20 du moteur, dans lequel un signal électrique est transmis du capteur inductif 1 vers un calculateur 2 du système de régulation S. Ceci n'est cependant pas limitatif, dans la mesure où le système de fixation de l'invention peut être appliqué à tout type d'équipement électrique, comprenant un système de transmission d'un signal électrique (capteur, actionneur, générateur, etc.) qui doit être isolé électriquement du bâti métallique (support) sur lequel il est fixé et être apte à transmettre le signal électrique à un autre équipement électrique, par exemple un système de traitement de ce signal.

Par ailleurs, on comprendra par conditions normales d'utilisation notamment les températures et efforts pouvant être appliqués à cet équipement électrique. Dans l'exemple illustré, il s'agit des températures et vibrations pouvant être appliquées au capteur lors de son utilisation dans un système de régulation S d'un moteur M, les températures pouvant aller de - 55°C à + 160°C environ.

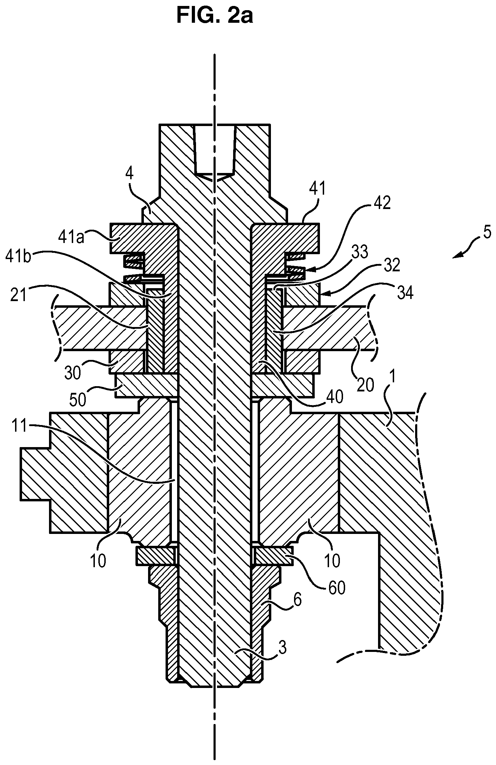

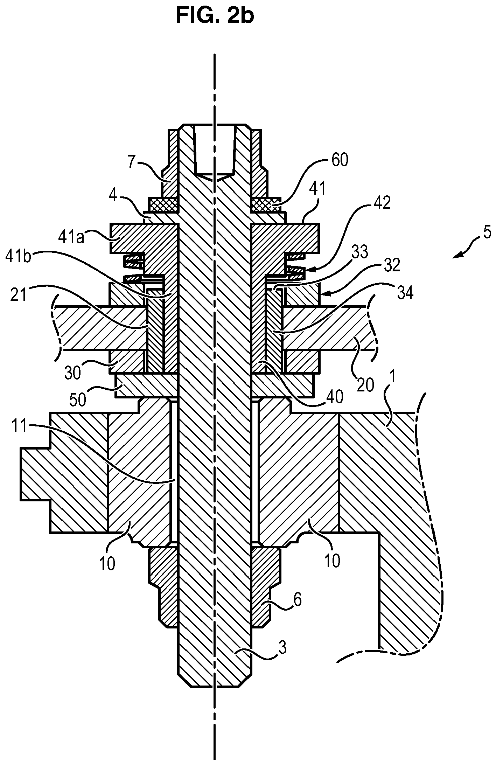

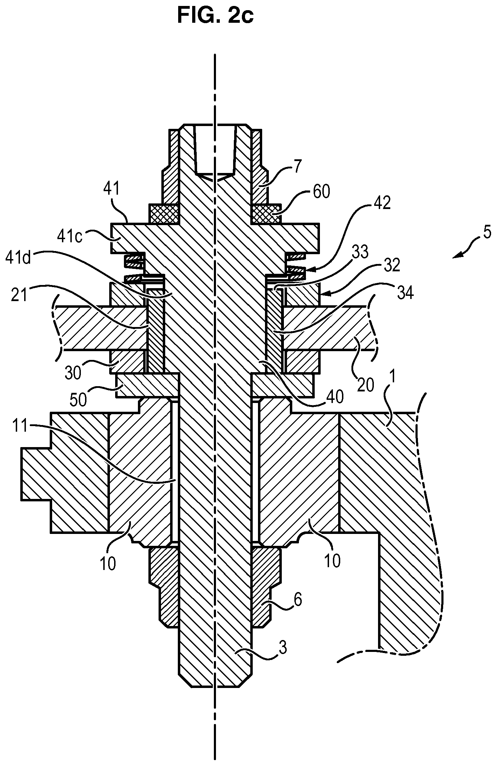

En se référant aux figures 2, on voit un capteur 1 fixé sur une pièce de structure métallique 20 d'un carter du moteur M via un insert d'interface 10 par l'intermédiaire d'un système de fixation 5, qui permet en outre son isolation électrique du support métallique 20. Le système de fixation 5 comprend pour cela des moyens d'isolation 30, 32, 34 et des moyens de maintien mécanique 40, 42 qui compriment les moyens d'isolation 30, 32 contre le support métallique 20 afin de les maintenir en contact avec le support métallique 20 à tout instant dans les conditions normales d'utilisation du capteur 1.

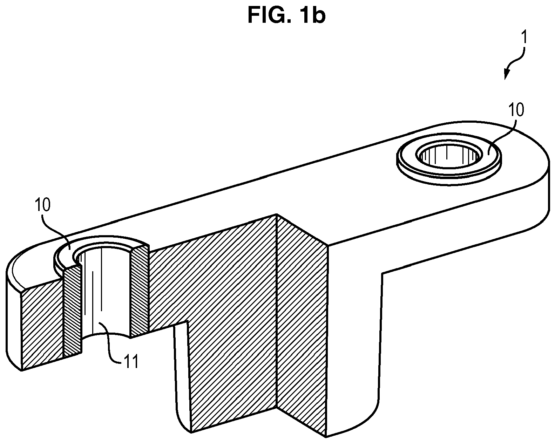

Le capteur 1 peut comprendre deux inserts d'interface métalliques 10 identiques, comme illustré sur la figure 1b, de manière à former un dipôle pour permettre le passage d'un courant électrique. Chaque insert 10 peut alors être fixé sur le support métallique 20 à l'aide d'un système de fixation 5 conforme à l'invention, ce qui rend en outre le montage plus robuste.

Chaque insert 10 comprend notamment un logement 11 adapté pour recevoir un axe de fixation 3 du système de fixation 5. Par exemple, le logement 11 peut être de forme globalement cylindrique. Ici, l'insert 10 a pour fonction de transmettre un signal électrique généré par le capteur 1 au calculateur 2 du système de régulation S par l'intermédiaire de cosses 60 et d'assurer la fixation et le maintien mécanique du capteur 1. Pour cela, il est réalisé de manière connue dans un matériau métallique, par exemple de l'acier inoxydable.

Le support métallique 20 comprend un logement traversant 21 afin de recevoir lui aussi l'axe de fixation 3. Par ailleurs, les dimensions internes du logement 21 du support métallique 20 sont plus grandes que le diamètre externe de l'axe 3, de manière à permettre l'insertion de pièces intercalaires entre le support métallique 20 et l'axe 3.

En particulier, le support métallique 20 est séparé de l'insert métallique 10 par des moyens d'isolation 30, 32, 34.

Les moyens d'isolation du système de fixation 5 peuvent comprendre deux rondelles isolantes 30, 32, disposées de part et d'autre du support métallique 20, et un tube isolant 34, agencé entre l'axe 3 et le support métallique 20. Les rondelles isolantes 30, 32 et le tube isolant 34 sont de préférence emmanchés sur l'axe 3.

Dans cette forme de réalisation, la première rondelle isolante 30 peut être disposée contre une surface inférieure du support métallique 20, en regard de l'insert métallique 10, tandis que la deuxième rondelle isolante 32 peut être disposée contre la surface opposée du support métallique 20, dite surface supérieure. Les rondelles isolantes 30, 32 sont réalisées de préférence dans un matériau présentant de bonnes caractéristiques mécaniques dans les conditions de fonctionnement du capteur 1 tout en assurant une bonne isolation électrique pour un coût réduit. Par exemple, les rondelles isolantes 30, 32 peuvent être réalisées en polyétherimide (PEI).

La tenue mécanique des rondelles isolantes 30, 32 peut encore être améliorée en chargeant le PEI de fibres de verre. Par exemple, les rondelles isolantes 30, 32 peuvent être réalisée dans un matériau du type ULTEM® 2400 ou ULTEM® 2410, qui comprennent du PEI chargé à 40% de fibres de verre.

Le tube isolant 34 quant à lui peut être de forme complémentaire de celle de l'axe 3, et est adapté pour isoler électriquement le support métallique 20 de l'axe 3. Il peut être réalisé dans tout matériau électriquement isolant, capable de tenir en température dans les conditions de fonctionnement du capteur 1. Par exemple, le tube isolant peut être réalisé en PTFE. Par ailleurs, le tube isolant 34 est dimensionné de manière à être en contact avec l'axe 3, à venir en appui contre la surface interne du logement 21 du support métallique 20, et à traverser en tout ou partie les rondelles 30, 32. Ici, le tube isolant 34 fait par exemple saillie en dehors du logement 21, et pénètre partiellement dans les rondelles 30 et 32.

Par ailleurs, comme illustré sur les figures, les dimensions des rondelles 30, 32 peuvent être choisies de manière à laisser un jeu avec les le tube isolant 34 afin de ne pas lui transmettre de contraintes mécaniques en conditions d'utilisation. Pour cela, une longueur du tube isolant 34 peut par exemple être comprise entre l'épaisseur du support métallique et l'épaisseur de l'empilement formé du support métallique 20 et des deux rondelles 30, 32, pour un diamètre externe au plus égal au diamètre interne des rondelles 30, 32. La deuxième rondelle isolante 32 peut en outre comprendre, au niveau de sa face en regard du tube isolant 34, une gorge annulaire 33, afin de garantir que seule une faible partie des contraintes qui lui sont appliquées sont transmises au tube isolant 34.

Les moyens de maintien mécanique du système de fixation 5 peuvent notamment comprendre un organe d'appui 41 monté sur l'axe 3 s'étendant transversalement à l'axe 3 et un moyen élastique 42, disposé entre l'organe d'appui 41 et la deuxième rondelle isolante 32, adapté pour venir en appui sur l'organe d'appui 41 de manière à exercer l'effort sur les moyens d'isolation (en particulier la première rondelle isolante 32). Le cas échéant, le système de fixation 5 comprend en outre un épaulement 4, adapté pour maintenir l'organe d'appui 41 fixe en position par rapport à l'axe 3. Pour cela, l'épaulement 4 s'étend transversalement à l'axe 3, de manière à former une butée adaptée pour recevoir l'organe d'appui 41.

Selon une première forme de réalisation (figure 2a), l'axe 3 est une vis. Le fût de la vis 3 est alors inséré dans le logement 21 du support métallique 20 et dans l'insert métallique 10, et reçoit les moyens d'isolation 30, 32, 34 ainsi que les moyens de maintien mécanique 41, 42, tandis qu'une surface inférieure de la tête de la vis 3 forme l'épaulement 4 du système de fixation 5 contre lequel l'organe d'appui 41 vient en butée.

Selon une deuxième forme de réalisation (figure 2b), l'axe 3 est une tige filetée adaptée pour recevoir un écrou 7. L'épaulement 4 du système de fixation 5 peut alors être une collerette transversale formée intégralement en une seule pièce avec la tige filetée 3 au niveau d'une extrémité de celle-ci, et l'organe d'appui 41 peut notamment être une collerette 41a d'une douille à collerette 40 (figures 2a et 2b).

La douille à collerette 40 est alors emmanchée sur l'axe 3, de telle sorte que sa collerette 41a se trouve en butée contre l'épaulement 4, et reçoit le long de sa partie cylindrique 41b les rondelles isolantes 30, 32, le tube d'isolation 34 et le support métallique 20. Autrement dit, le logement 21 du support métallique 20 est séparé d'une part de l'axe 3 par la douille 40 et le tube d'isolation 34, et d'autre part de l'épaulement par la collerette 41a et la deuxième rondelle d'isolation 32.

En variante, l'organe d'appui 41 peut être une collerette 41c formée intégralement d'une seule pièce avec l'axe 3 (figure 2c). Le système de fixation 5 ne comprend alors pas d'épaulement 4, l'organe d'appui 41 étant en soi déjà fixe par rapport à l'axe 3. Afin de garantir le contact entre l'axe 3 et le tube isolant 34, ainsi que le passage du signal électrique, l'axe 3 peut alors présenter une surépaisseur locale 41d s'étendant depuis la collerette 41c sur une longueur sensiblement égale à l'épaisseur de la rondelle 302 et du tube isolant 34. De manière alternative (non illustrée sur les figures), l'axe 3 ne comprend pas une telle surépaisseur et reste de diamètre constant jusqu'à la collerette 41c, une douille étant alors emmanchée sur l'axe 3 de manière à permettre le passage du signal et le contact mécanique avec le tube isolant 34.

Dans ce mode de réalisation, l'axe 3 peut par exemple être une tige filetée.

Le moyen élastique 42 quant à lui est emmanché sur l'axe 3, entre l'organe d'appui 41 et la deuxième rondelle isolante 32, de manière à pouvoir appliquer la contrainte en compression sur la première rondelle isolante 32. Dans le cas d'une douille à collerette 40, le moyen élastique 42 est donc emmanché sur le fût 41b de la douille 40, tandis que dans le cas de la collerette 41c formée intégralement avec l'axe 3, le moyen élastique 42 est emmanché directement sur l'axe 3.

On comprendra que cette contrainte en compression est transmise par l'intermédiaire de la deuxième rondelle isolante 32 aux pièces sous-jacentes du montage, à savoir notamment au support métallique 20, à la première rondelle isolante 30 ainsi qu'à l'insert métallique 10, ce qui permet d'assurer le maintien mécanique du capteur 1 sur le support métallique 20, malgré les vibrations et variations de température subies par le montage. En effet, le moyen élastique appliquant un effort de compression sur la deuxième rondelle isolante 32, toute déformation éventuelle des moyens isolants 30, 32, 34 due à des variations des conditions de l'environnement du capteur est compensée par l'élasticité du moyen élastique 42.

Le moyen élastique 42 peut par exemple être formé d'un ressort en compression, tel qu'un ressort hélicoïdal, des rondelles Belleville, des rondelles Smalley, etc. La raideur du ressort 42 est alors dimensionnée en fonction de la distance séparant l'organe d'appui 41 de la rondelle 32, de manière à résister aux contraintes en vibrations usuelles appliquées par le support métallique 20 et à contrôler l'écrasement des moyens d'isolation 30, 32, 34, et ce indépendamment du couple de serrage du système de fixation 5. Le couple de serrage des écrous n'est en effet pas transmis au ressort 42 ni aux moyens d'isolation 30, 32 34 grâce à la présence soit de la partie cylindrique 41b de la douille à collerette (figures 2a, 2b), soit de la surépaisseur 41d de l'axe 3 (figure 2c), selon la variante de réalisation, qui jouent un rôle de cale permettant de maintenir une distance minimale entre l'organe d'appui 41 et l'insert métallique 10 correspondant à la longueur de ladite cale. On comprendra en effet que tout effort de serrage appliqué sur le système de fixation 5 est transmis de l'écrou 6 à l'insert métallique 10, puis à la cale 41b, 41d et enfin à l'organe d'appui 41a, 41c, sans passer par les moyens d'isolation 30, 32, 34.

Par conséquent, les moyens d'isolation 30, 32, 34 ne sont contraints que par le moyen élastique 42, et l'effort appliqué à tout instant aux moyens d'isolation 30, 32, 34 peut donc être maitrisé avec précision et de manière indépendante en dimensionnant la raideur du ressort 42 et son écrasement en fonction de la distance entre l'organe d'appui 41 et la rondelle 32.

Il y a donc deux chemins d'efforts indépendants : un premier chemin d'efforts est appliqué par serrage du système de fixation 5 sur le support métallique 20, et est réalisé avec un couple standard à l'aide de l'écrou 6; le deuxième chemin d'efforts concerne quant à lui l'écrasement des moyens d'isolation 30, 32, 34 et est réalisé à l'aide du ressort 42 uniquement.

Ainsi, avec une raideur de l'ordre de 25 N/mm, le moyen élastique 42 est capable de résister à des gammes d'accélération (vibrations) allant jusqu'à 160 G pour une masse d'équipement de 40g, quel que soit le couple de serrage des écrous sur l'axe 3.

Selon une forme de réalisation, l'organe d'appui 41 comprend en outre un épaulement 43, s'étendant au voisinage du tube isolant 34. Le moyen élastique 42 est alors seulement en appui contre l'organe d'appui 41, de sorte que ni l'épaulement 43, ni le tube isolant 34, ne supportent de contraintes importantes. Le tube isolant 34 est donc moins susceptible de se déformer, malgré son matériau constitutif (matériau plastique) et l'environnement sévère auquel il est soumis.

De manière optionnelle, l'ensemble ainsi formé peut en outre comprendre une rondelle métallique 50, disposée entre les moyens d'isolation 30, 32, 34 et l'insert métallique 10. Dans le mode de réalisation décrit ci-dessus, la rondelle métallique 50 forme un appui à la fois pour la première rondelle isolante 30 et l'insert métallique 10, et peut jouer le rôle de cale de réglage afin de permettre un montage précis des pièces sur l'axe 3 et de régler l'entrefer du capteur 1 avec le turbocompresseur dont la vitesse de rotation doit être déterminée. Le cas échéant, le diamètre interne de la rondelle métallique 50 permet d'assurer un jeu lors du montage de la rondelle métallique 50 sur l'axe 3 afin d'améliorer le réglage de la position du capteur 1.

Enfin, une cosse 60 est emmanchée sur l'axe 3, de manière à être connectée électriquement à l'insert métallique 10 et à recevoir le signal électrique transmis par le capteur 1, et l'ensemble est maintenu en position par serrage d'un écrou 6 sur l'axe 3.

Pour cela, la cosse 60 peut être réalisée dans un matériau électriquement conducteur tel que du métal et disposée en butée contre l'organe d'appui 41, de sorte que le signal électrique transite de l'insert métallique 10 vers la cosse 60 par l'intermédiaire de l'axe 3, et le cas échéant la douille métallique 41b et/ou la rondelle métallique 50. L'axe 3 est ensuite fermé à l'aide de l'écrou 7 et/ou l'écrou 6, qui est serré de manière à garantir le maintien mécanique de l'ensemble et l'application de l'effort de compression par le moyen élastique 42.

En variante, comme illustré sur la figure 2a, la cosse 60 peut être montée en contact direct avec l'insert métallique 10, au niveau de sa face inférieure opposée aux moyens d'isolation, grâce notamment à l'agencement spécifique des moyens d'isolation 30, 32, 34 et des moyens de maintien mécanique 40, 42 par rapport à l'insert 10. Ce montage permet de réduire le nombre de surfaces en contact pour la transmission du signal électrique à la cosse 60, et donc les pertes par effet Joule, mais également les éventuelles discontinuités de signal. L'axe 3 doit alors être retourné par rapport à l'art antérieur afin de faciliter le montage de la cosse 60, de sorte que l'épaulement 4 se trouve au voisinage de l'organe d'appui 41. Les écrous 6 et/ou 7 sont ensuite vissés contre la cosse 60. L'ensemble formé par l'insert métallique 10 le capteur 1, les moyens d'isolation, le support métallique 20, les moyens de maintien mécanique 41, 42 et le cas échéant la rondelle métallique 50 est en effet monté préalablement au montage de la cosse 60, de sorte que le retournement de l'axe 3 permet de rendre la face inférieure de l'insert 10 accessible pour emmancher la cosse 60 et serrer l'écrou 6.

Afin de permettre un maintien mécanique suffisant sans en dégrader les moyens d'isolation 30, 32, 34, la rondelle métallique 50 est choisie de manière à pouvoir supporter un serrage standard de l'écrou 6 sur l'axe 3, qui peut être de l'ordre de 3.5 N.m (pour un axe 3 ayant un diamètre de l'ordre de 4.82 mm). Ainsi, la rondelle métallique 50 peut notamment être réalisée dans un matériau métallique du type acier inoxydable. Le cas échéant, lorsque le montage est réalisé avec une douille à collerette 40, celle-ci peut également être réalisée dans un matériau métallique du type acier inoxydable, en particulier dans sa zone cylindrique 41b en contact avec l'axe 3.

L'ensemble ainsi obtenu permet alors d'éviter la détérioration des moyens d'isolation électrique lors d'un serrage avec un couple standard, les efforts de serrage n'étant transmis qu'aux pièces métalliques (à savoir la cosse 60, l'insert 10, la rondelle 50 et la douille à collerette 40), et ce en permettant en outre un contact ferme entre l'insert métallique 10 et la cosse 60.

## Revendications

1. Système de fixation (5) pour un équipement électrique (1) sur un support métallique (20), comprenant :
- un axe (3) adapté pour être inséré à travers un logement traversant (21) du support métallique (20) et un insert métallique (10) de l'équipement électrique (1), adapté pour transmettre un signal électrique,
- des moyens d'isolation (30, 32, 34) du support métallique (20), pouvant s'étendre entre le support métallique (20) et l'insert métallique (10), et
- des moyens de maintien mécanique (40, 42) adaptés pour appliquer un effort sur les moyens d'isolation (30, 32) de manière à les maintenir en contact contre le support métallique (20) et l'insert métallique (10),
le système de fixation (5) étant **caractérisé en ce que** les moyens de maintien mécanique (40, 42) comprennent :
- un organe d'appui (41) s'étendant transversalement à l'axe (3), et
- un moyen élastique (42), disposé entre l'organe d'appui (41) les moyens d'isolation (30, 32), adapté pour exercer l'effort sur les moyens d'isolation (30, 32).

2. Système de fixation (5) selon la revendication 1, dans lequel le moyen élastique (42) est l'un au moins des éléments du groupe suivant : un ressort en compression, une entretoise.

3. Système de fixation (5) selon l'une des revendications 1 ou 2, dans lequel l'organe d'appui (41) est une collerette (41a) d'une douille à collerette (40) disposée entre l'axe (3) et le logement traversant (12) du support métallique (20).

4. Système de fixation (5) selon l'une des revendications 1 ou 2, dans lequel l'organe d'appui (41) est une collerette (41c) formée intégralement en une seule pièce avec l'axe (3).

5. Système de fixation (5) selon l'une des revendications 3 ou 4, comprenant en outre une cale (41b, 41d), s'étendant entre l'organe d'appui (41a, 41c) et l'insert métallique (10) le long de l'axe (3), et adaptée pour maintenir l'organe d'appui (41) et l'insert métallique (10) à une distance minimale correspondant à la longueur de ladite cale (41b 41d).

6. Système de fixation (5) selon l'une des revendications 1 à 5, dans lequel les moyens d'isolation comprennent :
- une première rondelle isolante (30) emmanchée sur l'axe (3) entre le support métallique (20) et l'insert métallique (10), et
- une deuxième rondelle isolante (32) emmanchée sur l'axe (3) entre le support métallique (20) et l'organe d'appui (41), et adaptée pour recevoir l'effort exercé par le moyen élastique (42).

7. Système de fixation (5) selon les revendications 5 et 6 prises en combinaison, dans lequel la cale (41b, 41d) s'étend entre l'axe (3) et les moyens d'isolation (30, 32, 34), de manière à empêcher la transmission auxdits moyens d'isolation (30, 32, 34) d'efforts appliqués par l'insert métallique (10) sur l'organe d'appui (41) ou inversement.

8. Système de fixation (5) selon l'une des revendications 6 ou 7, dans lequel les moyens d'isolation comprennent en outre un tube isolant (34) emmanché sur l'axe (3) et séparant le support métallique (20) de l'organe d'appui (41).

9. Système de fixation (5) selon la revendication 8, dans lequel la première et la deuxième rondelle isolante (32) et/ou le tube isolant (34) sont réalisés en polyétherimide.

10. Système de fixation (5) selon l'une des revendications 8 à 9, comprenant en outre une rondelle métallique (50), emmanchée sur l'axe (3) et disposée entre la première rondelle isolante (30) et l'insert métallique (10).

11. Système de fixation (5) selon l'une des revendications 1 à 10, comprenant en outre une cosse (60) emmanchée sur l'axe (3), en contact direct avec l'insert métallique (10) du côté opposé aux moyens d'isolation (30, 32, 34).

## Patentansprüche

1. System zur Befestigung (5) einer elektrischen Ausrüstung (1) auf einem Metallträger (20) umfassend:
- eine Achse (3), die geeignet ist, durch ein Durchgangsgehäuse (21) des Metallträgers (20) eingeführt zu werden, und einen Metalleinsatz (10) der elektrischen Ausrüstung (1), der geeignet ist, ein elektrisches Signal zu übertragen,
- Isoliermittel (30, 32, 34) des Metallträgers (20), die sich zwischen dem Metallträger (20) und dem Metalleinsatz (10) erstrecken können und
- mechanische Haltemittel (40, 42), die geeignet sind, um eine Kraft auf die Isoliermittel (30, 32) auszuüben, um sie in Kontakt mit dem Metallträger (20) und dem Metalleinsatz (10) zu halten,
wobei das Befestigungssystem (5) **dadurch gekennzeichnet ist, dass** die mechanischen Haltemittel (40, 42) Folgendes umfassen:
- ein Stützelement (41), das sich quer zur Achse (3) erstreckt, und
- ein elastisches Mittel (42), das zwischen dem Stützelement (41) und den Isoliermitteln (30, 32) angeordnet ist, das geeignet ist, die Kraft auf die Isoliermittel (30, 32) auszuüben.

2. Befestigungssystem (5) nach Anspruch 1, wobei das elastische Mittel (42) zumindest eines der Elemente der folgenden Gruppe ist: eine Druckfeder, ein Abstandshalter.

3. Befestigungssystem (5) nach einem der Ansprüche 1 oder 2, wobei das Stützelement (41) eine Schelle (41a) einer mit Flanschen versehenen Hülse (40) ist, die zwischen der Achse (3) und dem Durchgangsgehäuse (12) des Metallträgers (20) angeordnet ist.

4. Befestigungssystem (5) nach einem der Ansprüche 1 oder 2, wobei das Stützelement (41) eine Schelle (41c) ist, die vollständig aus einem einzigen Stück mit der Achse (3) gebildet ist.

5. Befestigungssystem (5) nach einem der Ansprüche 3 oder 4, das ferner einen Keil (41b, 41d) umfasst, der sich zwischen dem Stützelement (41a, 41c) und dem Metalleinsatz (10) entlang der Achse (3) erstreckt und geeignet ist, das Stützelement (41) und den Metalleinsatz (10) in einem minimalen Abstand entsprechend der Länge des Keils (41b, 41d) zu halten.

6. Befestigungssystem (5) nach einem der Ansprüche 1 bis 5, wobei die Isoliermittel Folgendes umfassen:
- eine erste Isolierscheibe (30), die auf der Achse (3) zwischen dem Metallträger (20) und dem Metalleinsatz (10) aufgesteckt ist, und
- eine zweite Isolierscheibe (32), die auf der Achse (3) zwischen dem Metallträger (20) und dem Stützelement (41) angebracht und geeignet ist, die von dem elastischen Mittel (42) ausgeübte Kraft aufzunehmen.

7. Befestigungssystem (5) nach den Ansprüchen 5 und 6 in Kombination, wobei sich der Keil (41b, 41d) zwischen der Achse (3) und den Isoliermitteln (30, 32, 34) erstreckt, um die Übertragung von Kräften, die durch den Metalleinsatz (10) auf das Stützelement (41) oder umgekehrt auf die Isoliermittel (30, 32, 34) ausgeübt werden, zu verhindern.

8. Befestigungssystem (5) nach einem der Ansprüche 6 oder 7, wobei die Isoliermittel ferner ein Isolierrohr (34) umfassen, das auf die Achse (3) aufgesteckt ist und den Metallträger (20) vom Stützelement (41) trennt.

9. Befestigungssystem (5) nach Anspruch 8, wobei die erste und die zweite Isolierscheibe (32) und/oder das Isolierrohr (34) aus Polyetherimid ausgeführt sind.

10. Befestigungssystem (5) nach einem der Ansprüche 8 bis 9, das ferner eine Metallscheibe (50) umfasst, die auf die Achse (3) aufgesteckt und zwischen der ersten Isolierscheibe (30) und dem Metalleinsatz (10) angeordnet ist.

11. Befestigungssystem (5) nach einem der Ansprüche 1 bis 10, das ferner eine Hülse (60) umfasst, die auf die Achse (3) aufgesteckt ist und in direkter Berührung mit dem Metalleinsatz (10) auf der gegenüberliegenden Seite zu den Isoliermitteln (30, 32, 34) steht.

## Claims

1. A system (5) for attaching electrical equipment (1) on a metallic support (20), comprising:
- a pin (3) adapted to be inserted through a through housing (21) of the metallic support (20) and a metallic insert (10) of the electrical equipment (1), adapted to transmit an electric signal,
- insulation means (30, 32, 34) of the metallic support (20), extendable between the metallic support (20) and the metallic insert (10), and
- mechanical retention means (40, 42) adapted to apply force to the insulation means (30, 32) so as to keep them in contact against the metallic support (20) and the metallic insert (10),
the system for attaching (5) being **characterized in that** the mechanical retention means (40, 42) comprise:
- a support element (41) extending transversally to the pin (3), and
- elastic means (42), arranged between the support element (41) and the insulation means (30, 32), adapted to exert force onto the insulation means (30, 32).

2. The system for attaching (5) according to claim 1, wherein the elastic means (42) is at least one of the elements of the following group: a compression spring, a spacer.

3. The system for attaching (5) according to one of claims 1 or 2, wherein the support element (41) is a collar (41a) of a collared sleeve (40) arranged between the pin (3) and the through housing (12) of the metallic support (20).

4. The system for attaching (5) according to one of claims 1 or 2, wherein the support element (41) is a collar (41c) formed integrally in a single piece with the pin (3).

5. The system for attaching (5) according to one of claims 3 or 4, further comprising a wedge (41b, 41d), extending between the support element (41a, 41c) and the metallic insert (10) along the pin (3), and adapted to keep the support element (41) and the metallic insert (10) at a minimal distance corresponding to the length of said wedge (41b, 41d).

6. The system for attaching (5) according to one of claims 1 to 5, wherein the insulation means comprise:
- a first insulating washer (30) fitted on the pin (3) between the metallic support (20) and the metallic insert (10), and
- a second insulating washer (32) fitted on the pin (3) between the metallic support (20) and the support element (41) and adapted to receive the force exerted by the elastic means (42).

7. The system for attaching (5) according to claims 5 and 6 taken in combination, wherein the wedge (41b, 41d) extends between the pin (3) and the insulation means (30, 32, 34), so as to prevent transmission to said insulation means (30, 32, 34) of forces applied by the metallic insert (10) onto the support element (41) or inversely.

8. The system for attaching (5) according to one of claims 6 or 7, wherein the insulation means further comprise an insulating tube (34) fitted on the pin (3) and separating the metallic support (20) from the support element (41).

9. The system for attaching (5) according to claim 8, wherein the first and the second insulating washer (32) and/or the insulating tube (34) are made of polyetherimide.

10. The system for attaching (5) according to one of claims 8 to 9, further comprising a metallic washer (50), fitted on the pin (3) and arranged between the first insulating washer (30) and the metallic insert (10).

11. The system for attaching (5) according to one of claims 1 to 10, further comprising a lug (60) fitted on the pin (3), in direct contact with the metallic insert (10) of the side opposite the insulation means (30, 32, 34).
